# EUROPÄISCHE PATENTSCHRIFT

(11) **EP 1 176 050 B1**
(45) Veröffentlichungstag und Bekanntmachung des Hinweises auf die Patenterteilung: **28.02.2007**
(21) Anmeldenummer: 01116280.7
(22) Anmeldetag: 05.07.2001
(51) Int. Cl.: B60N 3/10, B60N 2/46

(54) **Haltevorrichtung für einen Getränkebehälter**
Holder for beverage receptacle
Dispositif de support d'un réceptacle de boissons

(30) Priorität: 29.07.2000 DE 10037058
(43) Veröffentlichungstag der Anmeldung: 30.01.2002
(73) Patentinhaber: fischerwerke Artur Fischer GmbH & Co. KG, 72178 Waldachtal (DE); AUDI AG, 85057 Ingolstadt (DE)
(72) Erfinder: Schaal, Falk, 72275 Alpirsbach (DE); Stoll, Hans-Peter, 72280 Dornstetten (DE); Bieck, Torsten, 72178 Waldachtal (DE); Bolländer, Jochen, 85049 Ingolstadt (DE)

(56) Entgegenhaltungen:
- DE-A- 19 825 795
- US-A- 5 620 228
- PATENT ABSTRACTS OF JAPAN vol. 1995, no. 03, 28. April 1995 (1995-04-28) -& JP 06 336136 A (IKEDA BUSSAN CO LTD), 6. Dezember 1994 (1994-12-06)

## Beschreibung

Die Erfindung betrifft eine Haltevorrichtung für einen Getränkebehälter mit den Merkmalen des Oberbegriffs des Anspruchs 1. Getränkebehälter ist beispielsweise ein Becher, eine Tasse oder eine Getränkedose. Die Haltevorrichtung ist zum Einbau in eine klappbare Armlehne in einem Kraftwagen vorgesehen, die zwischen einem Fahrer- und einem Beifahrersitz angeordnet ist und zwischen einer in etwa horizontalen Gebrauchslage in eine nach oben stehende Nichtgebrauchslage hin- und herschwenkbar ist. In der Gebrauchslage befindet sich die Armlehne zwischen dem Fahrer- und dem Beifahrersitz und es können der Fahrer und/oder der Beifahrer einen Arm auf die Armlehne stützen. In der nach oben geklappten Nichtgebrauchslage befindet sich die Armlehne zwischen Rückenlehnen des Fahrer- und des Beifahrersitzes.

Haltevorrichtungen für Getränkebehälter zum Einbau beispielsweise in ein Armaturenbrett eines Kraftwagens sind bekannt. Bekannte derartige Haltevorrichtungen weisen einen Schlitten auf, der mit einer Schlittenführung schubladenartig zwischen einer eingeschobenen und einer ausgezogenen Stellung hin- und herverschiebbar geführt ist. Üblicherweise wird der Schlitten durch Federkraft in die ausgezogene Stellung verschoben und wird mit einer entriegelbaren Verriegelungseinrichtung gegen die Kraft eines Federelements in der eingeschobenen Stellung gehalten. In der ausgezogenen Stellung des Schlittens ist ein Getränkebehälter in die Haltevorrichtung einstellbar. Dazu weist der Schlitten oder ein an ihm angebrachter Halter eine Einstellöffnung auf, in die der Getränkebehälter einstellbar ist. Die Einstellöffnung stützt den eingestellten Getränkebehälter seitlich gegen Umkippen ab. Der Getränkebehälter steht auf einer Stütze oder Stützfläche auf, die beispielsweise vom Schlitten gebildet sein kann.

Die bekannten Haltevorrichtungen sind zum Einbau in einer unveränderlichen, näherungsweise horizontalen Lage vorgesehen. Bei einem Einbau in eine klappbare Armlehne haben die bekannten Haltevorrichtungen, insbesondere wenn sie durch Federkraft in die ausgezogene Stellung verschoben werden, den Nachteil, dass sie bei nach oben geklappter Armlehne nach oben ausfahren, wenn sie (unbeabsichtigt) entriegelt werden. Dies ist zumindest unerwünscht.

Aus der Druckschrift US-A-5,620,228 ist eine Haltevorrichtung für einen Getränkebehälter bekannt, der zum Einbau in eine klappbare Armlehne gedacht ist. Durch eine Schwerkraftverriegelungseinrichtung wird die Haltevorrichtung in einer vertikalen Lage verriegelt. Allerdings funktioniert diese Schwerkraftverriegelungseinrichtung nur in Kombination mit einer sog. Push-Push-Mechanik als Verriegelung für den Schlitten. Bei einer derartigen Push-Push-Mechanik wird die eingeschobene Position des Schlittens durch leichten Druck auf den Schlitten entriegelt. Die Druckschrift schlägt hierzu vor, dass die Schwerkraftverriegelungseinrichtung sich in Form eines Pendels oder einer Kugel zwischen Schlitten und Gehäuse klemmt, so dass der Schlitten nicht in das Gehäuse eindrückbar bzw. die Push-Push-Mechanik nicht entriegelbar ist. Die Schwerkraftverriegelungseinrichtung ist somit auf Haltevorrichtungen mit Push-Push-Mechanik in seiner Anwendung beschränkt.

Der Erfindung liegt daher die Aufgabe zugrunde, eine Haltevorrichtung für einen Getränkebehälter mit Schwerkraftverriegelungseinrichtung zu schaffen, dessen Schwerkraftverriegelungseinrichtung unabhängig von der Verriegelung des Schlittens ihre Funktion erfüllt. Sie soll ihre Funktion also insbesondere auch in Kombination mit einer tastenbetätigten Verriegelung des Schlittens erfüllen.

Diese Aufgabe wird erfindungsgemäß durch die Merkmale des Anspruchs 1 gelöst. Die erfindungsgemäße Haltevorrichtung weist eine Schwerkraftverriegelungseinrichtung auf, die den Schlitten in der eingeschobenen Stellung verriegelt, wenn sich der Schlitten nicht in einer näherungsweise horizontalen Lage befindet. Die Schwerkraftverriegelungseinrichtung stellt sicher, dass der Schlitten nur dann ausgezogen werden kann, wenn sich die klappbare Armlehne, in der die erfindungsgemäße Haltevorrichtung angeordnet ist, in ihrer in etwa horizontalen Gebrauchslage befindet. Die Erfindung verhindert ein Ausfahren des Schlittens aus der nach oben geklappten Armlehne. Die erfindungsgemäße Haltevorrichtung ist nicht auf den Einbau in nach oben klappbare Armlehnen beschränkt, sie lässt sich grundsätzlich auch in anderen, nach oben oder nach unten klapp- oder schwenkbaren Teilen anordnen.

Erfindungsgemäß erfolgt die Verriegelung der Schwerkraftverriegelungseinrichtung durch Eingreifen in eine Öffnung des Gehäuses. Die Schwerkraftverriegelungseinrichtung weist hierzu einen Verriegelungskörper auf, der schräg zu einer Verschieberrichtung des Schlittens verschieblich ist. Statt dem bekannten Klemmen zwischen Schlitten und Gehäuse, das nur das Bewegen des Schlittens in eine Richtung verhindert, kann durch das Eingreifen der Schwerkraftverriegelungseinrichtung in das Gehäuse in beide Richtungen verriegelt werden. Damit kann die Schwerkraftverriegelungseinrichtung unabhängig von der Art der Verriegelung des Schlittens verwendet werden.

In bevorzugter Ausgestaltung der Erfindung weist die Schwerkraftverriegelungseinrichtung einen Verriegelungskörper auf, der beweglich geführt ist und der sich durch Schwerkraft abhängig von der Lage des Schlittens der Haltevorrichtung zwischen einer Verriegelungsstellung und einer Entriegelungsstellung hin- und herbewegt. Befindet sich der Schlitten in seiner näherungsweise horizontalen Lage, bewegt die Schwerkraft den Verriegelungskörper in die Entriegelungsstellung, in der der Schlitten der Haltevorrichtung beweglich ist und ausgezogen werden kann. Befindet sich der Schlitten nicht in seiner näherungsweise horizontalen Lage, beispielsweise weil die klappbare Armlehne nach oben geklappt ist, bewegt die Schwerkraft den Verriegelungskörper in eine Verriegelungsstellung, in der der Verriegelungskörper den Schlitten unverschieblich in der eingeschobenen Stellung verriegelt. körper verschiebbar zu führen und beispielsweise als Bolzen auszubilden, der den Schlitten ortsfest beispielsweise an einem Gehäuse der Haltevorrichtung verriegelt, wenn sich der Schlitten nicht in einer näherungweise horizontalen Lage befindet.

Bei einer Ausgestaltung der Erfindung weist die Haltevorrichtung einen Halter mit einer Einstellöffnung für den Getränkebehälter auf, das mit einer Führung anhebbar am Schlitten geführt ist. Der Halter wird beim Ausziehen des Schlittens angehoben und beim Einschieben des Schlittens wieder auf den Schlitten abgesenkt. Durch den in der ausgezogenen Stellung des Schlittens angehobenen Halter weist der Halter einen ausreichenden vertikalen Abstand vom Schlitten auf, um einen eingestellten Getränkebehälter sicher gegen Kippen seitlich abzustützen. Durch das Absenken des Halters beim Einschieben des Schlittens lässt sich die Haltevorrichtung flach bauend ausbilden und dadurch platzsparend in einem niedrigen Einbauraum unterbringen. Erfindungsgemäß verläuft ein Anhebeweg des Halters in Bezug zum Schlitten nach oben und entgegen einer Ausziehrichtung des Schlittens. Dadurch weist der Halter beim Ausziehen des Schlittens keinen oder zumindest einen kürzeren Weg in Ausziehrichtung des Schlittens auf als der Schlitten. Dies hat den Vorteil, dass sich der Ausziehweg des Schlittens verkürzen lässt, der Schlitten und der Halter stehen weniger weit aus ihrem Einbauraum vor. Bereits der verkürzte Ausziehweg für sich ist ein Vorteil, da die Haltevorrichtung bei ausgezogenem Schlitten weniger weit in einen Fahrgastraum vorsteht. Weiterer Vorteil ist, dass beispielsweise bei einem unbeabsichtigten Aufstützen auf den ausgezogenen Schlitten durch den kürzeren Ausziehweg ein Hebelarm, mit der die Belastung auf den Schlitten wirkt, verkürzt ist. Dies verringert eine Bruchgefahr des Schlittens.

Bei einer Ausgestaltung der Erfindung weist die Führung des Halters ein Vierhebelgetriebe auf, wobei der Schlitten einen Hebel und der Halter einen gegenüberliegenden Hebel des Vierhebelgetriebes bilden. Das Vierhebelgetriebe kann beispielsweise eine Parallelogrammführung bilden, die den Halter parallel zum Schlitten anhebt und auf den Schlitten absenkt. Ist der Schlitten für einen Einbau in einer schiefen Ebene vorgesehen, d. h. verläuft die Verschieberichtung des Schlittens in einer schiefen Ebene, kann das Vierhebelgetriebe eine von einem Parallelogramm abweichende Geometrie aufweisen, so dass der Halter beim Anheben in Bezug auf den Schlitten verschwenkt.

Eine Ausgestaltung der Erfindung sieht vor, die Einstellöffnung für den Getränkebehälter in ihrer Größe veränderbar auszubilden. Dazu weist der Halter ein bewegliches, beispielsweise verschieb- oder schwenkbares Verstellelement auf, mit dem sich eine Größe der Einstellöffnung verändern lässt. Des Weiteren weist die Haltevorrichtung eine Arretiereinrichtung für das Verstellelement auf, die das Verstellelement in seiner Stellung arretiert.

Die Arretiereinrichtung kann beispielsweise als gegen Klemmkraft bewegliches Verstellelement ausgebildet sein. Bei einer Ausgestaltung der Erfindung ist eine Rasteinrichtung als Arretiereinrichtung für das Verstellelement vorgesehen, die das Verstellelement auch nach vielfachem Verstellen zuverlässig in seiner Stellung arretiert.

Die Erfindung wird nachfolgend anhand eines in der Zeichnung dargestellten Ausführungsbeispiels näher erläutert. Es zeigen:
- Figur 1: eine erfindungsgemäße Haltevorrichtung in perspektivischer Darstellung schräg von hinten;
- Figur 2: die Haltevorrichtung aus Figur 1 in perspektivischer Darstellung schräg von vorne;
- Figuren 3 - 6: die Haltevorrichtung aus Figur 1 in Seitenansicht mit geschnittenem Gehäuse in verschiedenen Stellungen; und
- Figur 7: eine Schnittdarstellung eines Halteteils der Haltevorrichtung aus Figur 1 von oben.

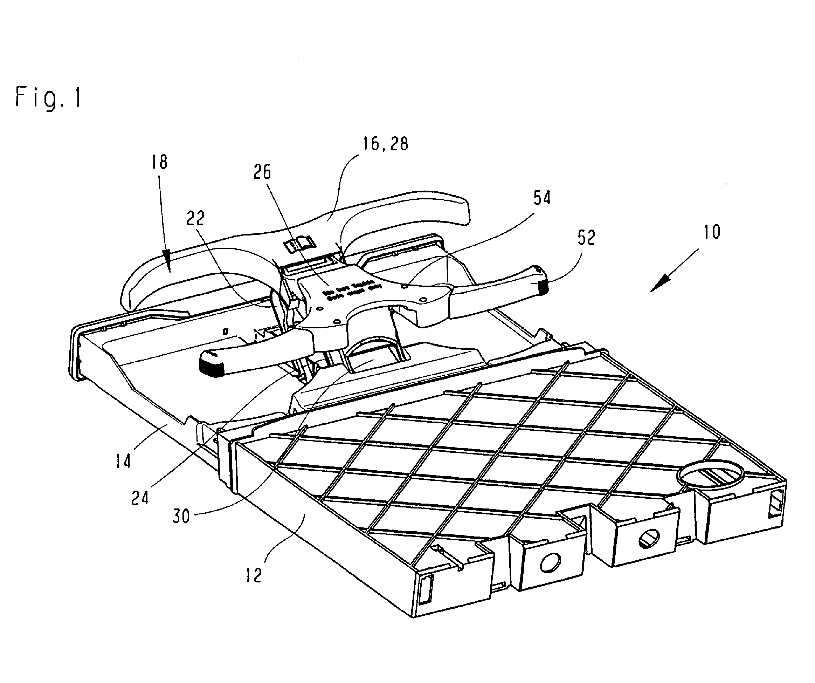

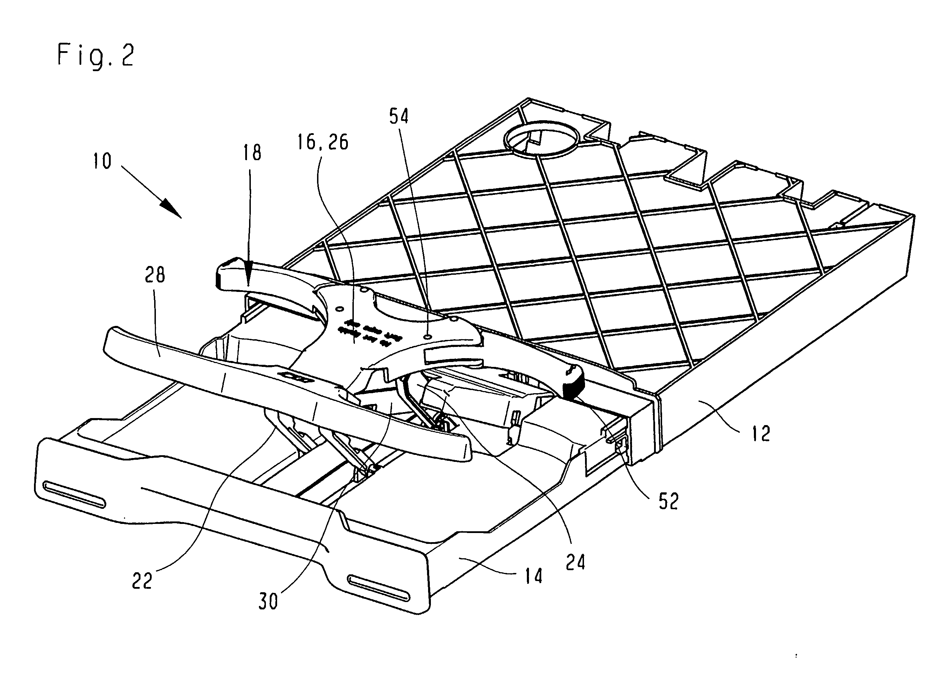

Die in Figuren 1 und 2 dargestellte, erfindungsgemäße Haltevorrichtung 10 ist zum Einbau in eine Stirnseite einer in Figuren 1 und 2 nicht dargestellten, klappbaren Armlehne in einem Kraftwagen vorgesehen. Solche Armlehnen werden in Kraftwagen zwischen einem Fahrer- und einem Beifahrersitz angeordnet. Sie sind zwischen einer in etwa horizontalen Gebrauchslage und einer nach oben stehenden Nichtgebrauchslage hin- und herklappbar. In der in etwa horizontalen Gebrauchslage befindet sich die Armlehne zwischen dem Fahrer- und dem Beifahrersitz und es können der Fahrer und/oder der Beifahrer einen Arm auf die Armlehne aufstützen. In der nach oben geklappten Nichtgebrauchslage befindet sich die Armlehne zwischen Rückenlehnen des Fahrer- und Beifahrersitzes.

Die erfindungsgemäße Haltevorrichtung 10 weist ein in Draufsicht rechteckiges, flaches und verripptes Gehäuse 12 auf. In dem Gehäuse 12 ist ein Schlitten 14 schubladenartig verschiebbar geführt. Der Schlitten 14 ist wannenartig ausgebildet, er bildet eine Tropfschale zum Auffangen von Flüssigkeit, die aus einem in die Haltevorrichtung 10 eingestellten Getränkebehälter herausschwappt. Der Schlitten 14 ist aus der in Figuren 1 und 2 dargestellten, ausgezogenen Stellung in eine in das Gehäuse 12 eingeschobene Stellung und umgekehrt verschiebbar. Das Verschieben in die ausgezogene Stellung erfolgt in an sich bekannter Weise mittels eines in der Zeichnung nicht dargestellten Federelements. In der in das Gehäuse 12 eingeschobenen Stellung wird der Schlitten 14 gegen die Kraft des Federelements mittels einer Verriegelungseinrichtung gehalten. Die Verriegelungseinrichtung ist als Herzkurven- oder Push-Push-Mechanik ausgebildet, die durch leichten Druck des in das Gehäuse 12 eingeschobenen Schlittens 14 in das Gehäuse 12 hinein entriegelbar ist. Derartige Federelemente und Verriegelungseinrichtungen sind dem Fachmann geläufig, weswegen darauf hier nicht näher eingegangen werden soll. Am Schlitten 14 ist ein mehrteiliger Halter 16 angebracht, der beim Ausziehen des Schlittens 14 angehoben und beim Einschieben des Schlittens 14 in den als Wanne ausgebildeten Schlitten 14 hinein abgesenkt wird. Der Halter 16 weist zwei Einstellöffnungen 18 zum Einstellen von Getränkebehältern wie beispielsweise Bechern, Tassen oder Getränkedosen auf. Die Einstellöffnungen 18 umschließen einen eingestellten, nicht dargestellten Getränkebehälter am Umfang um mehr als 180°, so dass der Getränkebehälter nicht umkippen kann. Der Getränkebehälter steht auf dem Schlitten 14 auf.

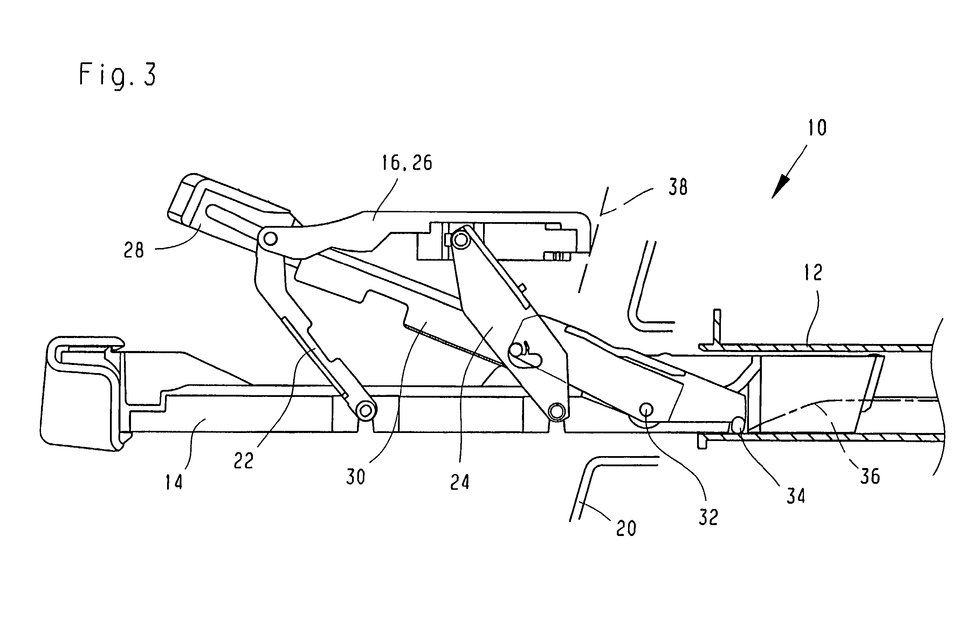

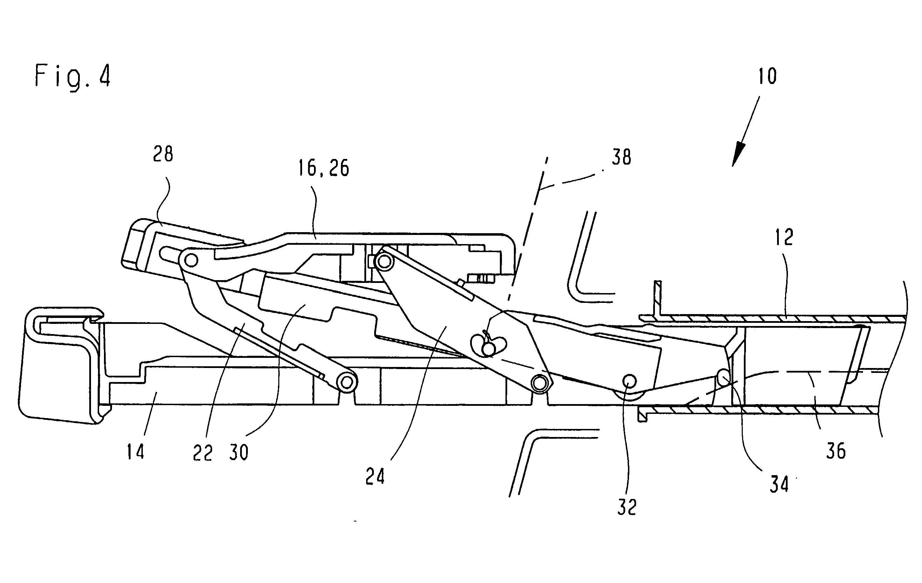

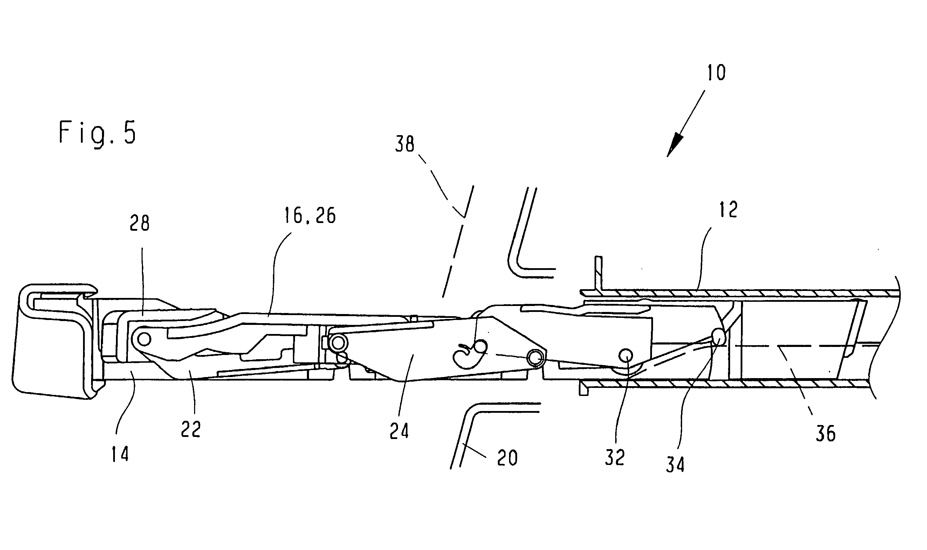

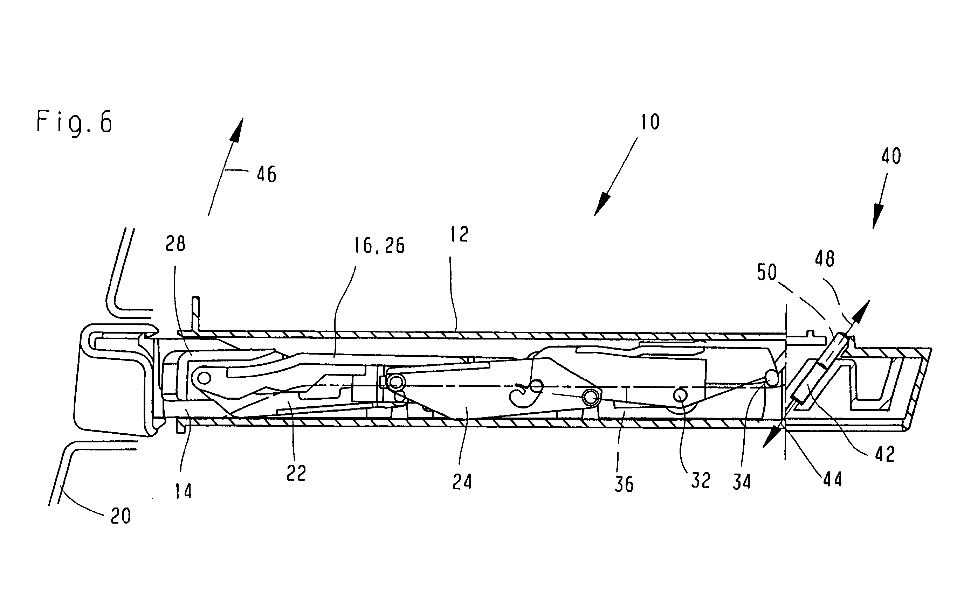

Das Anheben und Absenken des Halters 16 wird nachfolgend anhand Figuren 3 - 6 erläutert, wobei Figur 3 den Schlitten 14 in der ausgezogenen, in Figuren 1 und 2 dargestellten Stellung zeigt. Figur 6 zeigt den Schlitten 14 in der in das Gehäuse 12 eingeschobenen Stellung, Figuren 4 und 5 zeigen Zwischenstellungen des Schlittens 14. In Figuren 3 - 6 ist eine dem Betrachter zugewandte Seitenwand des Schlittens 14 weggelassen, um eine Führung zum Anheben und Absenken des Halters 16 sichtbar zu machen. In Figuren 3 - 6 ist eine Armlehne 20 eines Kraftwagens, in die die erfindungsgemäße Haltevorrichtung 10 eingebaut ist, im Bereich einer Einbauöffnung für die Haltevorrichtung 10 andeutungsweise dargestellt.

Wie in Figur 3 gut erkennbar, ist der Halter 16 mit zwei Hebeln 22, 24 mit dem Schlitten 14 verbunden. Die Hebel 22, 24 sind an einem Ende schwenkbar mit dem Schlitten 14 und an einem anderen Ende schwenkbar mit dem Halter 16 verbunden. Im dargestellten Ausführungsbeispiel der Erfindung sind die Hebel 22, 24 parallel zueinander und gleich lang, sie bilden eine Parallelogrammführung des Halters 16 am Schlitten 14. Gemeinsam mit dem Schlitten 14 und dem Halter 16 bilden die Hebel 22, 24 ein Vierhebelgetriebe. Wie in Figuren 1 und 2 sichtbar, sind die Hebel 22, 24 in einem Mittelbereich des Schiebers 14 und des Halters 16 angeordnet. Dabei weist die Haltevorrichtung 10 jeweils zwei in Seitenansicht deckungsgleich und mit Abstand nebeneinander angeordnete Hebel 22, 24 auf, von denen in Figuren 3 - 6 nur dem Betrachter zugewandte Hebel 22, 24 sichtbar sind. Ein in der Zeichnung nicht sichtbares Torsionsfederelement schwenkt die Hebel 22, 24 nach oben und hebt dadurch den Halter 16 an.

Der Halter 16 ist zweiteilig ausgebildet, er weist ein rückwärtiges Teil 26 sowie ein vorderes Teil 28 auf. Das vordere Teil 28 ist in Draufsicht näherungsweise T-förmig, wobei ein Schaft 30 des "T" zwischen den Hebeln 22, 24 hindurch in eine Öffnung des Gehäuses 12 der Haltevorrichtung 10 ragt. Das vordere Teil 28 des Halters 16 ist schwenk- und verschiebbar mit dem rückwärtigen Teil 26 des Halters 16 und einem vorderen Hebel 22 der Hebel 22, 24 verbunden. Nahe einem hinteren Ende ist der Schaft 30 des T-förmigen, vorderen Teils 28 des Halters 16 schwenkbar mit dem Schlitten 14 verbunden. Die Schwenkverbindung ist mit 32 bezeichnet. An einem hinteren Ende weist der Schaft 30 seitlich abstehende Zapfen 34 auf, die auf einer Rampe 36 verschiebbar geführt sind. Die Rampe 36, die in der Zeichnung mit Strichpunktlinien dargestellt ist, steht von Seitenwänden des Gehäuses 12 nach innen ab. Die Rampe 36 verläuft von einem Boden des Gehäuses 12 zunächst schräg nach oben bis in eine mittlere Höhe des Gehäuses 12 und anschließend horizontal nach hinten bis in einen rückwärtigen Bereich des Gehäuses 12. Wird der Schlitten 14 aus der in Figur 3 dargestellten, ausgezogenen Stellung in das Gehäuse 12 hinein verschoben, drückt die Rampe 36 die Zapfen 34 des Schafts 30 nach oben und schwenkt dadurch den Schaft 30 wie in Figuren 4 und 5 dargestellt nach unten. Auf diese Weise wird durch Einschieben des Schlittens 14 in das Gehäuse 12 der Halter 16 auf den Schlitten 14 abgesenkt. Beim Ausziehen des Schlittens 14 aus dem Gehäuse 12 drückt das bereits genannte, nicht dargestellte Torsionsfederelement den Halter 16 in die in Figuren 1 - 3 dargestellte, angehobene Stellung nach oben.

Die den Halter 16 am Schlitten 14 anhebbar führenden Hebel 22, 24 sind in der angehobenen Stellung des Halters 16 vom Schlitten 14 schräg nach oben und vorn stehend angeordnet. Beim Absenken des Halters 16 während des Einschiebens des Schlittens 14 in das Gehäuse 12 schwenken die Hebel 22, 24 nach unten und zugleich in Bezug auf den Schlitten 14 nach vorn, d.h. in Ausziehrichtung des Schlittens 14. Dadurch wird der Halter 16 beim Absenken in Bezug auf den Schlitten 14 entgegen dessen Einschieberichtung nach vorn, d. h. vom Gehäuse 12 und der Armlehne 20 weg bewegt. Eine Bewegungsrichtung des Halters 16 beim Absenken ist in Figuren 3 - 5 an einer hinteren Kante des Halters 16 mit einer Strichlinie 38 dargestellt. Die hintere Kante des Halters 16 bewegt sich beim Absenken schräg nach unten und vorn, also entgegen der Einschieberichtung des Schlittens 14. Die hintere Kante des Halters 16 bewegt sich parallel zu einer Stirnfläche der Armlehne 20, bis der Halter 16, wie in Figur 5 dargestellt, vollständig auf den Schlitten 14 abgesenkt ist. Ein Abstand zwischen dem Halter 16 und der Stirnfläche der Armlehne 20 verändert sich also nicht während des Absenkens des Halters 16. Dadurch ist es möglich, den Halter 16 mit geringem Abstand von der Stirnseite der Armlehne 20 anzuordnen. Auf diese Weise wird ein Ausziehweg des Schlittens 14 und eine Länge, um die der Schlitten 14 in der ausgezogenen Stellung aus der Armlehne 20 vorsteht, verkürzt.

An seinem hinteren Ende weist der Schlitten 14 eine Schwerkraftverriegelungseinrichtung 40 auf, die in Figur 6 dargestellt ist. Die Schwerkraftverriegelungseinrichtung 40 weist einen Verriegelungskörper in Form eines Bolzens 42 auf, der in einem zylindrischen Loch verschieblich gelagert ist. Das Loch ist in einem hinteren Bereich des Schlittens 14 angeordnet, es verläuft in einem Winkel von 45° zu einer Verschieberichtung des Schlittens 14. Befindet sich der Schlitten 14 in der dargestellten, horizontalen Lage, verschiebt die Schwerkraft den Bolzen 42 im Loch im Schlitten 14 in Richtung des Pfeils 44 schräg nach unten. Dies ist eine Entriegelungsstellung der Schwerkraftverriegelungseinrichtung 40, in der der Schlitten 14 im Gehäuse 12 verschiebbar ist. Wird die Armlehne 20 und mit ihr zusammen die in die Armlehne 20 eingebaute, erfindungsgemäße Haltevorrichtung 10 in Richtung des Pfeils 46 um 90° oder mehr nach oben geklappt, bewegt die Schwerkraft den Bolzen 42 in Richtung des Strichlinienpfeils 48. Diese Verschieberichtung 48 des Bolzens 42 verläuft bei nach oben geklappter Armlehne 20 schräg nach unten, wie unschwer erkennbar wird, wenn das Zeichnungsblatt um 90° oder mehr in Richtung des Pfeils 46 gedreht wird. In dieser Verriegelungsstellung steht der Bolzen 42, wie mit Strichlinien angedeutet, aus einer Oberseite des Schlittens 14 vor, er greift in eine Öffnung 50 in einer Oberseite des Gehäuses 12 ein. Auf diese Weise ist der Schlitten 14 unverschieblich im Gehäuse 12 verriegelt. Wird die Armlehne 20 wieder in ihre horizontale Lage nach unten geklappt, bewegt die Schwerkraft den Bolzen 42 wieder in die mit durchgezogenen Linien dargestellte Entriegelungsstellung, der Bolzen 42 kommt außer Eingriff von der Öffnung 50 des Gehäuses 12 und der Schlitten 14 ist im Gehäuse 12 verschiebbar.

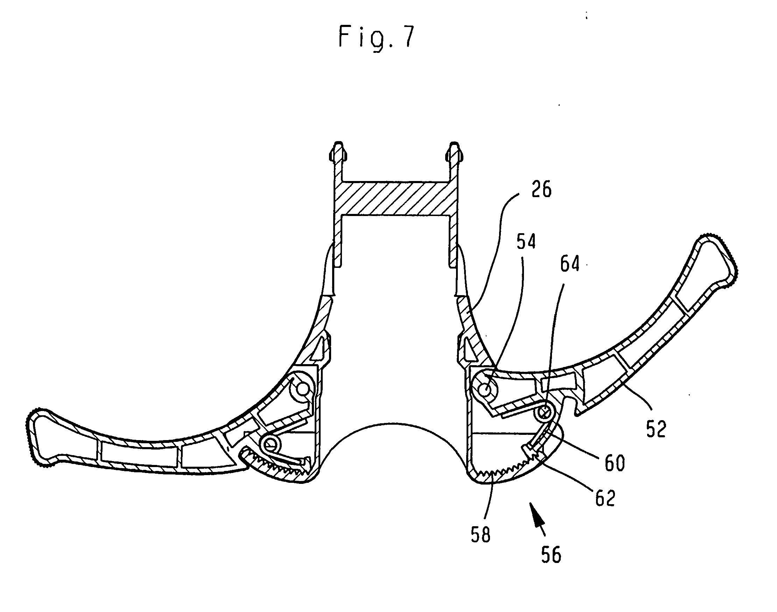

Das rückwärtige Teil 26 des Halters 16 weist auf jeder Seite ein zur Seite abstehendes, fingerartiges Verstellelement 52 auf. Das Verstellelement 52 ist, wie in Figur 7 dargestellt, mit einer Schwenkzapfenverbindung 54 schwenkbar mit dem rückwärtigen Teil 26 des Halters 16 verbunden. Figur 7 zeigt eine Draufsicht des rückwärtigen Teils 26 des Halters 16, wobei eine Oberseite des rückwärtigen Teils 26 weggeschnitten ist, um die Verbindung der Verstellelemente 52 mit dem rückwärtigen Teil 26 des Halters 16 sichtbar zu machen. Die Verstellelemente 52 weisen eine Rasteinrichtung 56 auf, die sie in ihrer Schwenkstellung arretiert. Die Rasteinrichtung 56 weist eine mit dem rückwärtigen Teil 26 des Halters 16 einstückige Innenverzahnung 58 auf. Die Innenverzahnung 58 verläuft auf einem Kreisbogenabschnitt konzentrisch um die Zapfenverbindung 54 herum. Das Verstellelement 52 weist eine Federzunge 60 auf, von deren freiem Ende Zähne 62 abstehen. Diese Zähne 62 stehen in Eingriff mit der Innenverzahnung 58 des rückwärtigen Teils 26 des Halters 16. Die Federzunge 60 drückt die Zähne 62 elastisch in Eingriff mit der Innenverzahnung 58. Unterstützt wird die Federwirkung der Federzunge 60 von einem einliegenden Torsionsfederelement 64. Die in die Innenverzahnung 58 eingreifenden Zähne 62 arretieren das Verstellelement 52 in seiner Schwenkstellung. Durch Druck in tangentialer Richtung zur Schwenkzapfenverbindung 54 auf das Verstellelement 52 lassen sich die Zähne 62 außer Eingriff von der Innenverzahnung 58 bringen und das Verstellelement 52 verschwenken. Dadurch lässt sich eine Größe der Einstellöffnung 18 verändern und an unterschiedliche Durchmesser von Getränkebehältern anpassen.

## Patentansprüche

1. Haltevorrichtung (10) für einen Getränkebehälter, die zum Einbau in eine klappbare Armlehne in einem Kraftwagen vorgesehen ist, mit einem Gehäuse (12) und mit einem Schütten (14), der mit einer Schlittenführung schubladenartig zwischen einer eingeschobenen und einer ausgezogenen Stellung hin- und herverschiebbar geführt ist, wobei in der ausgezogenen Stellung des Schlittens (14) ein Getränkebehälter in die Haltevorrichtung (10) einstellbar ist, und wobei die Haltevorrichtung (10) eine Schwerkraftverriegelungseinrichtung (40) aufweist, die den Schlitten (14) in der eingeschobenen Stellung verriegelt, wenn sich der Schlitten (14) nicht in einer näherungsweise horizontalen Lage befindet, **dadurch gekennzeichnet, dass** die Schwerkraftverriegelungseinrichtung (40) den Schlitten (14) in der eingeschobenen Stellung durch Eingreifen in eine Öffnung (50) des Gehäuses (12) verriegelt und dass die Schwerkraftverriegelungseinrichtung (40) einen Verriegelungskörper (42) aufweist, der schräg zu einer Verschieberichtung des Schlittens (14) verschieblich ist.

2. Haltevorrichtung nach Anspruch 1, **dadurch gekennzeichnet, dass** die Schwerkraftverriegelungseinrichtung (40) einen Verriegelungskörper (42) aufweist, der sich durch Schwerkraft in eine Verriegelungsstellung bewegt, wenn der Schlitten (14) in eine nicht näherungsweise horizontale Lage geschwenkt wird.

3. Haltevorrichtung nach Anspruch 1, **dadurch gekennzeichnet, dass** die Schwerkraftverriegelungseinrichtung (40) einen Verriegelungskörper (42) aufweist, der sich durch Schwerkraft in eine Entriegelungsstellung bewegt, wenn der Schlitten (14) in eine näherungsweise horizontale Lage geschwenkt wird.

4. Haltevorrichtung nach Anspruch 1, **dadurch gekennzeichnet, dass** die Haltevorrichtung (10) einen Halter (16) mit einer Einstellöffnung (18) für den Getränkebehälter aufweist, der mit einer Führung (22, 24) anhebbar am Schlitten (14) geführt ist und der beim Ausziehen des Schlittens (14) angehoben und beim Einschieben des Schlittens (14) wieder auf den Schlitten (14) abgesenkt wird, wobei ein Anhebeweg des Halters (16) in Bezug zum Schlitten (14) nach oben und entgegen einer Ausziehrichtung des Schlittens (14) verläuft, so dass der Halter (16) beim Ausziehen des Schlittens (14) keinen oder zumindest einen kürzeren Weg in Ausziehrichtung des Schlittens (14) zurücklegt als der Schlitten (14).

5. Haltevorrichtung nach Anspruch 4, **dadurch gekennzeichnet, dass** die Führung des Halters (16) ein Vierhebelgetriebe (14, 16, 22, 24, 26) aufweist, wobei der Schlitten (14) einen Hebel und der Halter (16, 26) einen gegenüberliegenden Hebel des Vierhebelgetriebes (14, 16, 22, 24, 26) bilden.

6. Haltevorrichtung nach Anspruch 1, **dadurch gekennzeichnet, dass** die Haltevorrichtung (10) einen Halter (16) mit einer Einstellöffnung (18) für einen Getränkebehälter aufweist, und dass der Halter (16) ein Verstellelement (52) aufweist, das beweglich am Halter (16) angebracht ist und mit dem sich eine Größe der Einstellöffnung (18) einstellen lässt, und dass der Halter (16) eine Arretiereinrichtung (56) für das Verstellelement (52) aufweist, mit der das Verstellelement (52) in seiner Stellung arretierbar ist.

7. Haltevorrichtung nach Anspruch 6, **dadurch gekennzeichnet, dass** die Arretiereinrichtung eine Rasteinrichtung (56) aufweist.

## Claims

1. Holding device (10) for a drinks container, which holding device (10) is intended for installation in a foldable arm rest in a motor vehicle, having a housing (12) and having a carriage (14) which is so guided by a carriage guide means in the manner of a drawer as to be displaceable back and forth between a pushed-in position and a pulled-out position, it being possible to insert a drinks container into the holding device (10) when the carriage (14) is in the pulled-out position, and the holding device (10) having a gravity locking device (40) which locks the carriage (14) in the pushed-in position when the carriage (14) is not in an approximately horizontal position, **characterised in that** the gravity locking device (40) locks the carriage (14) in the pushed-in position by means of engagement in an opening (50) in the housing (12); and **in that** the gravity locking device (40) has a locking member (42), which is displaceable at a slant relative to the displacement direction of the carriage (14).

2. Holding device according to claim 1, **characterised in that** the gravity locking device (40) has a locking member (42), which moves into a locked position as a result of gravity, when the carriage (14) is pivoted into a position that is not approximately horizontal.

3. Holding device according to claim 1, **characterised in that** the gravity locking device (40) has a locking member (42), which moves into an unlocked position as a result of gravity, when the carriage (14) is pivoted into an approximately horizontal position.

4. Holding device according to claim 1, **characterised in that** the holding device (10) has a holder (16) having an insertion opening (18) for the drinks container, which holder (16) is raisably guided on the carriage (14) by a guide means (22, 24) and which holder (16), when the carriage (14) is pulled out, is raised and, when the carriage (14) is pushed in, is lowered back onto the carriage (14), the path of raising of the holder (16) being oriented upwards in relation to the carriage (14) and contrary to the pull-out direction of the carriage (14) so that, on pulling out the carriage (14), the holder (16) travels no distance or at least a shorter distance in the carriage (14) pull-out direction than the carriage (14).

5. Holding device according to claim 4, **characterised in that** the guide means of the holder (16) has a four-lever mechanism (14, 16, 22, 24, 26), the carriage (14) forming one lever and the holder (16, 26) forming an opposite lever of the four-lever mechanism (14, 16, 22, 24, 26).

6. Holding device according to claim 1, **characterised in that** the holding device (10) has a holder (16) having an insertion opening (18) for a drinks container; and **in that** the holder (16) has an adjusting element (52), which is movably mounted on the holder (16) and by means of which the size of the insertion opening (18) can be adjusted and **in that** the holder (16) has a securing device (56) for the adjusting element (52), by means of which the adjusting element (52) can be secured in its position.

7. Holding device according to claim 6, **characterised in that** the securing device has a catch device (56).

## Revendications

1. Dispositif de maintien (10) d'un récipient de boissons prévu pour être monté dans un accoudoir rabattable d'un véhicule, avec un logement (12) et un chariot (14) qui est guidé de manière à pouvoir être déplacé comme un tiroir en va-et-vient sur une glissière de chariot, entre une position rentrée et une position sortie, un récipient de boissons pouvant être inséré dans le dispositif de maintien (10) dans la position sortie du chariot (14) et le dispositif de maintien (10) présentant un dispositif de verrouillage par gravité (40) qui verrouille le chariot (14) dans la position rentrée, lorsque le chariot (14) n'est pas dans une position approximativement horizontale, **caractérisé en ce que** le dispositif de verrouillage par gravité (40) verrouille le chariot (14) dans la position rentrée par encliquetage dans une ouverture (50) du logement (12) et **en ce que** le dispositif de verrouillage par gravité (40) présente un corps de verrouillage (42) qui est mobile de manière oblique par rapport à un sens de déplacement du chariot (14).

2. Dispositif de maintien selon la revendication 1, **caractérisé en ce que** le dispositif de verrouillage par gravité (40) présente un corps de verrouillage (42) qui se déplace par gravité dans une position de verrouillage lorsque le chariot (14) est basculé dans une position approximativement non horizontale.

3. Dispositif de maintien selon la revendication 1, **caractérisé en ce que** le dispositif de verrouillage par gravité (40) présente un corps de verrouillage (42) qui se déplace par gravité dans une position de déverrouillage lorsque le chariot (14) est basculé dans une position approximativement horizontale.

4. Dispositif de maintien selon la revendication 1, **caractérisé en ce que** le dispositif de maintien (10) présente un support (16) avec une ouverture réglable (18) pour le récipient de boissons, qui est guidé par un guide (22, 24) de manière à pouvoir être soulevé sur le chariot (14) et qui est soulevé lorsque le chariot (14) est sorti et rabaissé de nouveau sur le chariot (14) lorsque le chariot (14) est rentré, un trajet de soulèvement du support (16) s'étendant par rapport au chariot (14) vers le haut et contre un sens de sortie du chariot (14), de façon à ce que le support (16), lorsque le chariot (14) est sorti, n'effectue aucun ou effectue au moins un plus court trajet dans le sens de sortie du chariot (14), que le chariot (14).

5. Dispositif de maintien selon la revendication 4, **caractérisé en ce que** le guide du support (16) présente un mécanisme à quatre leviers (14, 16, 22, 24, 26), le chariot (14) formant un levier et le support (16, 26) formant un levier opposé du mécanisme à quatre leviers (14, 16, 22, 24, 26).

6. Dispositif de maintien selon la revendication 1, **caractérisé en ce que** le dispositif de maintien (10) présente un support (16) avec une ouverture réglable (18) pour un récipient de boissons, et que le support (16) présente un élément de réglage (52) qui est placé de manière mobile sur le support 16 avec lequel une taille de l'ouverture réglable (18) peut être réglée et que le support (16) présente un dispositif d'arrêt (56) pour l'élément de réglage (52) avec lequel l'élément de réglage (52) peut être bloqué dans sa position.

7. Dispositif de maintien selon la revendication 6, **caractérisé en ce que** le dispositif d'arrêt présente un dispositif d'encliquetage (56).
